# EUROPEAN PATENT SPECIFICATION

(11) **EP 2 511 277 B1**
(45) Date of publication and mention of the grant of the patent: **13.07.2016**
(21) Application number: 10836252.6
(22) Date of filing: 10.12.2010
(51) Int. Cl.: C07D 487/14, H01S 3/213, C07F 5/02

(54) **SYNTHESIS OF 8-AMINOBORON-DIPYRROMETHENES HAVING BLUE FLUORESCENCE**
SYNTHESE VON 8-AMINOBORON-DIPYRROMETHENEN MIT BLAUER FLUORESZENZ
SYNTHÈSE DE 8-AMINOBORODIPYRROMÉTHÈNES À FLUORESCENCE BLEUE

(30) Priority: 10.12.2009 MX 2009013486
(43) Date of publication of application: 17.10.2012
(73) Proprietor: Universidad de Guanajuato, C.P. 36000 Guanajuato (MX)
(72) Inventor: PEÑA CABRERA, Eduardo, Guanajuato (MX); GÓMEZ DURAN, César Fernando Azael, Guanajuato (MX); FLORES RIZO, Juan Orlando, Guanajuato (MX)
(74) Representative: Elzaburu Marquez, Alberto
(86) International application number: PCT/MX2010/000151
(87) International publication number: WO 2011/071360

(56) References cited:
- WO-A1-94/19355
- US-A- 4 916 711
- GOMEZ-DURDN, C.F. ET AL.: '8-PropargylaminoBODIPY: unprecedented blue-emitting pyrromethene dye. Synthesis, photophysics and laser properties' CHEMICAL COMMUNICATIONS vol. 46, 2010, pages 5103 - 5105, XP008157347
- ACEBAL, P. ET AL.: 'Theorical study of second-order non-linear optical properties of pyrromethene dyes for photonic application' JOURNAL OF PHYSICS B: ATOMIC, MOLECULAR AND OPTICAL PHYSICS vol. 36, 2003, pages 2445 - 2454, XP008157332
- GOUD T V ET AL: "Synthesis of 8-heteroatom-substituted 4,4-difluoro-4-bora-3a,4a-diaza-s-indacene dyes (BODIPY)", TETRAHEDRON, ELSEVIER SCIENCE PUBLISHERS, AMSTERDAM, NL, vol. 62, no. 21, 22 May 2006 (2006-05-22), pages 5084-5091, XP025001965, ISSN: 0040-4020, DOI: 10.1016/J.TET.2006.03.036 [retrieved on 2006-05-22]

## Description

### OBJECT OF THE INVENTION

The object of this invention is the innovative synthesis of 8-aminoboron-dipyrromethenes according to the claims. These types of compounds have the special characteristic of fluorescing in blue, this characteristic makes them unique in their type because there is no record of a compound derived from boron-dipyrromethene that has the characteristic to fluoresce in the blue region of the electromagnetic spectrum. 4 aminoboron-dipyrromethene compounds that fluoresce in blue are disclosed; the colour blue has a range that corresponds to 470 nm to 450 nm, hence, these compounds fluoresce from 480 nm to 437 nm covering blue and regions close to this which would be about 10 nm beneath or over the blue region, highlighting the propargylamine-boron-dipyrromethene (1) which it does with more quantum efficiency.

The amino group directly linked to the chromophore causes new absorption and emission bands in the blue zone of the visible region, with which an unexplored spectral range to date, is covered with derivatives based on the boron-dipyrromethene structure. It is important to mention that the synthesis method is very simple, with high chemical yields around 90% and high quantum efficiency with a value of 0.94 with regards the propargylamine-boron-dipyrromethene (1). A high chemical yield indicates that most of the starting material was converted in the desired product and quantum efficiency is the quotient of the photons emitted over the photons absorbed.

For this reason, the compounds presented where the effectiveness of the synthesis is highlighted using the aminoderivatives as nucleophiles, sufficiently strong to displace the thiomethyl of the starting material, 8-thiomethyl-boron-dipyrromethene (Formula 5), with no assistance from any base, the region where these compounds fluoresce, which is something new of which we there is no record.

### SIMILAR PATENTS

With regards the synthesis of boron-dipyrromethenes that fluoresce blue, there is no record of any compound with these characteristics and the boron-dipyrromethenes herein disclosed are the first to emit in the blue zone of the electromagnetic spectrum. There are compounds that present uses in which the aminoboron-dipyrromethenes herein disclosed could be used, but these compounds are molecules that much more complex and with very complicated synthesis methods where more working hours are required in the laboratory and with far more complex molecules, with a larger number of atoms than our compounds, they obtain emissions of 470 nm with a not so high quantum efficiency = 0.8 in tetrahydrofuran. [1]

There are also proteins that are fluorescent in the blue zone, being on the borderline since they emit at 480 nm, however their use is very restricted as they are particularly used in the biological area, and yet these types of proteins fluoresce blue depending on the medium in which they find themselves and their quantum efficiency is not very high, Φ= 0.68 [2].

There are compounds that were patented because of their laser use, as with perylene, which fluoresces at 410 nm in cyclohexane and a quantum efficiency of Φ= 0.94, it is a compound of 5 rings, p-terphenyl which has an emission of 290 nm in cyclohexane and a quantum efficiency of 0.93, the 9.10-diphenylanthracene is a compound with a high quantum efficiency at 1.0, but this compound fluoresces at 350 nm, an emission that does not correspond to the colour blue, in short these types of compounds aimed at their laser usage do not present a variety in the fluorescence zone in blue, [3] however the aminoboron-dipyrromethenes herein disclosed present a variety of fluorescence with the possibility that with more aminos substituted in that position, we could create a wider range for the emission of the colour blue.

Goud T.V. et al, "Synthesis of 8-heteroatom-substituted 4,4-difluoro-4-bora-3a, 4a-diaza-s-indacene dyes (BODIPY)", Tetrahedron, Elsevier Science Publisher, vol 62, no. 21, pages 5084-5091, discloses the reaction between aniline and a thioether precursor of an 8-aminoboron dipyrromethene in dichloromethane.

### References

[1] Patent number WO2005118606. European Patent Office
   Preparation of fluorine-substituted 2-phenylpyridine-iridium complexes and luminescent material made with the same. Konno, Hideo. (National Institute of Advanced Industrial Science and Technology, Japan).
[2] Patent number WO2004111236. European Patent Office
   Fluorescent proteins from coral favia favus, mutagenesis, and use in fluorescent labelling, protein localization and dynamic studies. Miyawaki, Atsushi; Tsutsui, Hidekazu; Karasawa, Satoshi. (Riken Corp., Japan; Medical and Biological Laboratories Co., Ltd.). PCT Int. Appl. (2004), 66 pp.
[3] Patent number 3857793. United States Patent
   FLUORESCENT ORGANIC COMPOUND LASER, inventors: Pappalardo, Romano G. (Sudbury, MA) Ahmed, Samir A. (Manhattan, NY).

### BACKGROUND

Since its description in 1968, the boron-dipyrromethenes have been synthesised through complicated methodologies, which involve many stages, long reaction times, complex purifications and low yield. With the passing of time, techniques for obtaining these compounds have been improving, and we have achieved a large colour palette under the UVC light (280 nm - 200 nm), except the blue fluorescence and colours close to this. Only Boyer and colleagues, about 10 years ago (Heteroat. Chem. 1993, 4, 603 and 1993, 4, 609) attempted to synthesise blue boron-dipyrromethenes. In this case, the structure of the chromophore was drastically altered in order to decrease displacement, and highly fluorescent derivatives were not obtained not even with high laser efficiencies. The present invention consists of a method to be able to displace the thiomethyl group, from the starting material (Formula 5), the thiomethyl-boron-dipyrromethene, which is the basis for obtaining the 8-aminoboron-dipyrromethene with fluorescence.,This methodology had been the displacement of thiomethyl by a carbon-carbon coupling of Liebeskind-Srogl, during the synthesis of these compounds we obtained a great variety of compounds with fluorescence in different zones of the electromagnetic spectrum; in our work group we have achieved this displacement only through nucleophilic substitution with some amino derivative that because of the electronegativity of the nitrogen and that electronic pair that it has without sharing, it provides nucleophiles for the thiomethyl substitution and form the aminoboron-dipyrromethene.

Another advantage of the compounds presented, is their structure which does not have voluminous functional groups, i.e., it does not present molecules with a large number of anchored atoms at position 8, which translates to its easy synthesis.

The invention to be protected is the 8-aminoboron-dipyrromethene according to Formula 4 and its synthesis method, because it is very general and simple. It is important to mention that there is no general synthesis reported for obtaining 8-aminoboron-dipyrromethene and a lot less for compounds with these fluorescent characteristics in the blue region of the electromagnetic spectrum.

### Method to synthesise 8-aminoboron-dipyrromethenes in the blue region of the electromagnetic spectrum with laser properties in short reaction times.

In this way, a family of 8-aminoboron-dipyrromethenes was synthesised in reaction times (of 50 to 120 minutes) and the chemical yield is 90% to 94%.
The advantages that this invention presents in the synthesis of 8-aminoboron-dipyrromethenes are the very simple conditions required in order to carry out a simple nucleophilic substitution, which consists of substituting a poorly-nucleophilic atom by a more nucleophilic one, the nucleophile is the capacity of an atom to donate electron pairs, in this case the nitrogen of the amines used is more electronegative and more nucleophilic towards the electron pair it has available, and substitutes the sulphur that is less electronegative and does not have electron pairs available that provide more nucleophile, this reaction is taken to a temperature of 25°C (with the exception of amino BDP) and with no external agent as catalyst, in dichloromethane as moist solvent, this is to use it without any treatment for eliminating the small amount of water that could contain the solvent, since normally a molecular mesh is used to dry the water and the recipient where the solvent is kept is conserved under nitrogen atmosphere; aside from using this moist solvent, it is common in reactions where a group is placed in position 8 for the reaction to be carried out in an inert atmosphere, this is the recipient where the reaction is carried out, is placed under nitrogen atmosphere. Another important advantage is its purification, this turns out to be very simple, the purification is the process by which we obtain our pure products without any impurities that may derive from the reaction carried out, which can be solvents or a by-product, for these compounds, and performing only one crystallisation we obtain the products; the crystallisation consists of placing our product in a solvent that completely dissolves it and in the least amount, then adding another solvent in which the product is not very soluble but the impurities can be dissolved, and with this we obtain the clean product without any by-products or traces of solvent, it is not necessary to carry out a column purification since the reaction is clean, i.e. by-products that are difficult to eliminate are not generated, the only one formed is methylthiol and this one is easily eliminated by its very low boiling point.

Therefore, the novelty of this invention is having synthesised the 8-aminoboron-dipyrromethene, that has adequate characteristics for its use as a laser and unique fluorescence properties in blue, of which there is no record, and it is important because of its absorption and emission characteristics, unknown in boron-dipyrromethene derivatives.

The technique that has been developed to displace the thiomethyl group is very efficient and simple, even today we only have the four derived amino members, but there is great potential to use compounds that have characteristics similar to the aminoderivatives used, which grows the compound variety that can be obtained, and that really, apart from the synthesis of these compounds, the technique used is very simple and will help grow the family of these derivatives.

In our research group, colourings that have fluorescent properties in a wide variety of colours have been developed. When synthesising these aminoboron-dipyrromethenes, especially the reference compound propargylamine-boron-dipyrromethene, on which we conducted a photophysical study that resulted in being a compound that can be used in lasers and with adequate characteristics for this, mainly because of high quantum efficiency that presents at 0.94, apart from the blue colour in which this compound fluoresces.

### SHORT DESCRIPTION OF THE FIGURES

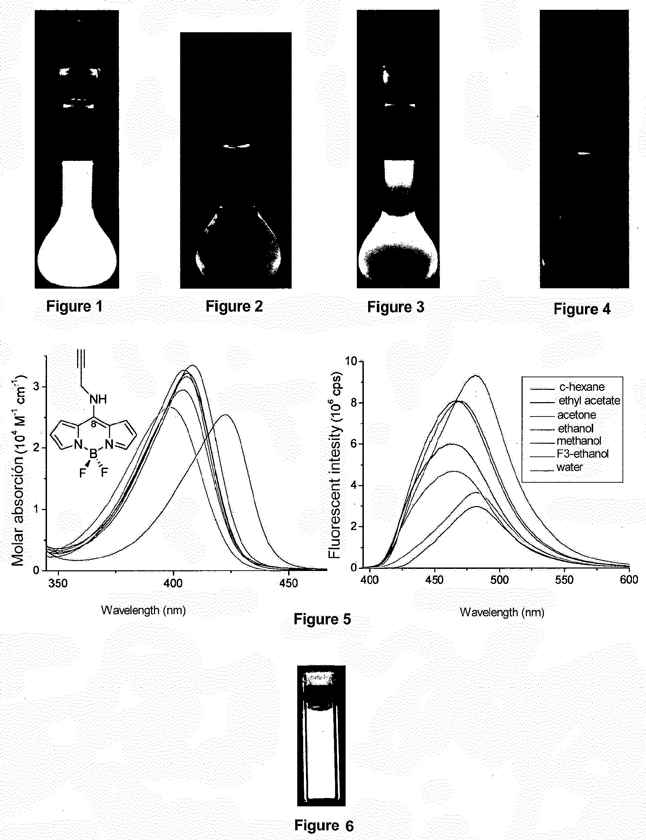

Formula 1 represents the reference compound 8-propargylamine-boron-dipyrromethene, this compound is obtained from a substitution of the thiomethyl group, as observed in figure 1 this compound has blue fluorescence emitting at 469.3 nm with a quantum efficiency of 0.94.
Formula 4 corresponds to the 8-aminoboron-dipyrromethene, observed in figure 4 with blue fluorescence at 437.5 nm and with a quantum efficiency of 0.92.
Figure 5 corresponds to the absorption and emission graphs of Formula 1, where each lines represents a different solvent.
Figure 6 indicates the fluorescence that the starting material, thiomethyl-boron-dipyrromethene, presents.

Note: The fluorescence is caused by the short UV lamp wavelength at 254 nm.

### DETAILED DESCRIPTION OF THE INVENTION

The 8-aminoboron-dipyrromethene is obtained in the following way:
a) The thiomethyl group is substituted with ammonium acetate as a source of ammonia, in order to perform the substitution at position 8 of the thiomethyl-boron-dipyrromethene, to give rise to the corresponding aminoboron-dipyrromethene.
b) This substitution is carried out by placing the 1 equivalent of thiomethyl-boron-dipyrromethene with 2 ammonium acetate that was in methanol/water 1:1 solution.

Starting material (8-thiomethyl-boron-dipyrromethene):

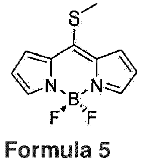

With this method we obtained the compounds presented below (Formula 1 is a reference compound)

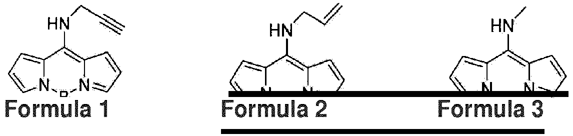

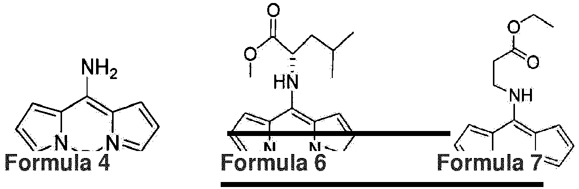

The characteristics of these compounds are detailed below:

### 8-propargylamine-boron-dipyrromethene (Formula 1)

The method to synthesise this compound is indicated in reaction 1.

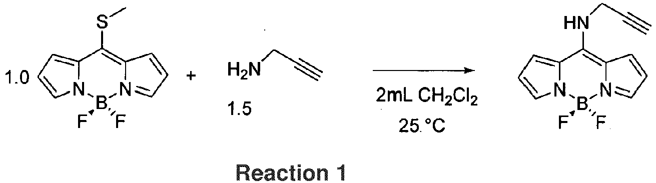

In a 50 ml flask, we placed 1.0 equivalents (100 mg, 0.4201 mmol) of thiomethyl-boron-dipyrromethene, which is dissolved with 2 ml of dichloromethane and once dissolved, the amine is added, in this case 1.5 equivalents of propargylamine (34.7 mg, 0.6302 mmol), with a magnetic stirring on an stirring plate, the reaction is taken to 25°C.

The reaction completes in a time of 60 minutes with an yield of 94%. It presents as yellow crystals that show yellow fluorescence. CCD (30% AcOEt/Hexanes) R*f* = 0.17 cm; UV-Vis λ_{abs}|= 404.8 λ_{flu}|= 464 (methanol) p.d. 176.0 - 178.0 °C; IR (KBr, cm⁻¹): 633, 659, 732, 763, 1073, 1106, 1227, 1389, 1402, 1554, 1592, 3282, 3363, 3379. ¹H RMN (200 MHz, CDC13) δ 2.56 (1 H, m, *J*=2.6 Hz), 4.52 (2H, m *J*=2.73 Hz), 6.51 (2H, s), 6.70 (1 H, s), 7.13 (2H, s), 7.67 (2H, s); ¹³C RMN (75.5 MHz, (CD₃)₂CO), δ 36.8, 75.8, 78.0, 114.4, 115.7, 117.5, 122.9, 125.7, 126.2, 133.0, 136.3, 149.5.

### Proparaylamine-boron-dipyrromethene photophysics (Formula 1)

**Table 1: Propargylamine-boron-dipyrromethene photophysics in various solvents**

| **Solvent** | λ_{abs}\| (nm) | εₘₐₓ (10⁴M⁻¹cm⁻¹) | λ_{flu} \| (nm) | Δ*v*ₛₜ (cam-') | φ\| | τ (ns) |
|---|---|---|---|---|---|---|
| Water | 398.2 | 2.6 | 481.5 | 4345 | 0.32 | 2.00* |
| F₃-ethanol | 404.0 | 2.9 | 480.7 | 3950 | 0.88 | 6.34* |
| Methanol | 404.8 | 3.3 | 464.5 | 3175 | 0.52 | 3.22 |
| Ethanol | 406.4 | 3.2 | 463.0 | 3010 | 0.66 | 3.81 |
| Acetone | 406.0 | 3.1 | 466.5 | 3195 | 0.86 | 4.92 |
| Ethyl acetate | 408.4 | 3.3 | 469.3 | 3175 | 0.94 | 5.13 |
| c-Hexane | 422.4 | 2.5 | 482.2 | 2935 | 0.93 | 5.34* |

In the table we can observe the behaviour of the compound when it is dissolved in a variety of solvents, we observe that the fluorescence varies from 463 nm to 481.5 nm obtaining the highest quantum efficiency in ethyl acetate at 0.94.

### 8-aminoboron-dipyrromethene (Formula 4)

The method for synthesising this compound is indicated in reaction 4.

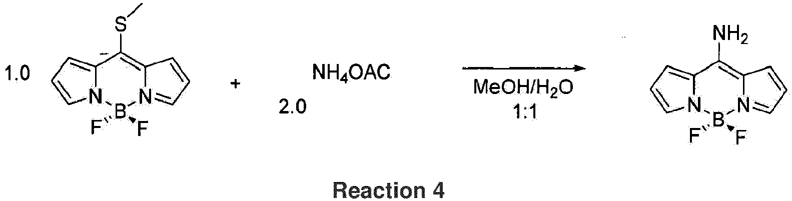

In a 50 ml flask, we placed 1.0 equivalents of thiomethyl-boron-dipyrromethene (80 mg, 0.3361 mmol), which is dissolved with 2 ml, 1 ml of water and 1 ml of methanol, once dissolved the amine is added, in this case 2.0 equivalents of ammonium acetate (38 mg, 0.5042 mmol), which acts as ammonia equivalent, with a magnetic stirring on an stirring plate and in an oil bath the reaction is taken to 60 °C.

It has a reaction time of 120 minutes and an yield of 91%. It presents in yellow crystals. CCD (30% AcOEt/Hexanes) R*f* = 0.07 cm; UV-Vis λ_{abs}|= 398 λ_{flu}= 444 (methanol) p.d. 160.0 - 162.0 °C; IR (KBr, cm⁻¹): 521, 579, 726, 757, 944, 1023, 1041, 1076, 1148, 1277, 1306, 1401, 1457, 1567, 1659, 3113, 3273, 3369, 3459; ¹H RMN (200 MHz, CDC13) δ 6.19 (2H, s), 6.49 (2H, s) 7.10 (2H, s), 7.65 (2H, s), ¹³C RMN (75.5 MHz, CD3CN), δ 115.49, 119.84, 125.29, 135.0, 150.86.
**thyl ester of 8-L-Leucine-boron-dipyrromethene (Formula 6)**

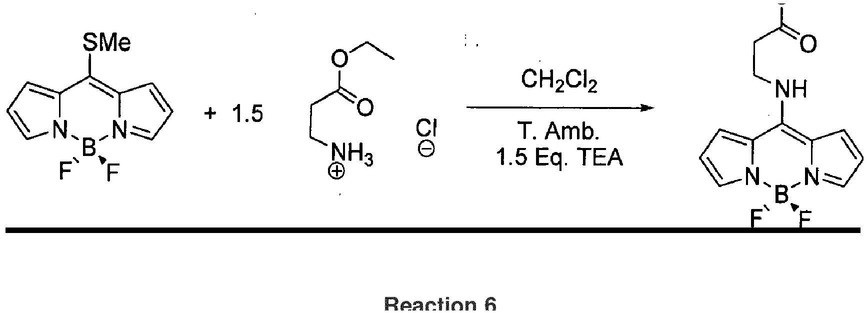

## Claims

1. An 8-aminoboron-dipyrromethene of the formula:

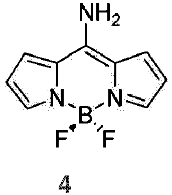

2. A process for obtaining the compound according to claim 1, comprising the steps of
a) dissolving a compoud of formula 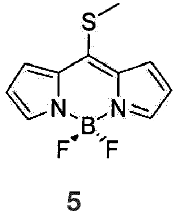 in MeOH/H₂O 1:1; and
b) adding ammonium acetate.

3. The process according to claim 2, wherein a nucleophilic substitution is carried out in position 8 of the compound of formula 5.

4. The process according to claim 2, wherein 2.0 equivalents of ammonium acetate are added per 1.0 equivalent of the compound of formula 4.

5. The process according to claim 2, wherein the addition of ammoniun acetate is carried out with stirring at 60ºC

6. Use of the compound according to claim 1 as laser light emitter in the blue region of the electromagnetic radiation spectrum.

## Patentansprüche

1. Ein 8-Aminobor-dipyrromethen der Formel:

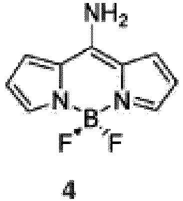

2. Ein Verfahren zum Erhalten der Verbindung nach Anspruch 1, das die Schritte der
a) Auflösung einer Verbindung der Formel 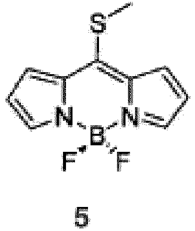 in MeOH/H2O 1:1 und
b) der Zugabe von Ammoniumacetat umfasst.

3. Das Verfahren nach Anspruch 2, wobei eine nukleophile Substitution in Position 8 der Verbindung der Formel 5 erfolgt.

4. Das Verfahren nach Anspruch 2, wobei 2,0 Äquivalente Ammoniumacetat pro 1,0 Äquivalent der Verbindung der Formel 4 zugefügt werden.

5. Das Verfahren nach Anspruch 2, wobei die Zugabe von Ammoniumacetat unter Rühren bei 60 °C erfolgt.

6. Verwendung der Verbindung nach Anspruch 1 als Laserlichtemitter im blauen Bereich des elektromagnetischen Strahlungsspektrums.

## Revendications

1. Un 8-aminobore-dipyrrométhène de la formule :

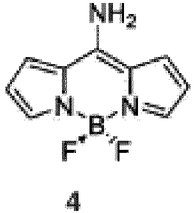

2. Un procédé pour obtenir le composé selon la revendication 1, comprenant les étapes consistant à
a) dissoudre un composé de formule 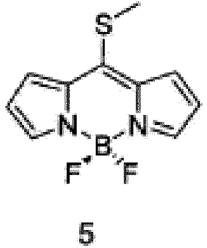 dans MeOH/H₂O 1:1 ; et
b) ajouter de l'acétate d'ammonium.

3. Le procédé selon la revendication 2, dans lequel une substitution nucléophile est réalisée en position 8 du composé de formule 5.

4. Le procédé selon la revendication 2, dans lequel 2.0 équivalents d'acétate d'ammonium sont ajoutés par 1.0 équivalent du composé de formule 4.

5. Le procédé selon la revendication 2, dans lequel l'ajout d'acétate d'ammonium est réalisé avec agitation à 60°C.

6. Utilisation du composé selon la revendication 1 comme émetteur de lumière laser dans la région bleue du spectre de rayonnement électromagnétique.
